# EUROPÄISCHE PATENTANMELDUNG

(11) **EP 1 410 864 A1**
(43) Veröffentlichungstag der Anmeldung: **21.04.2004**
(21) Anmeldenummer: 03021421.7
(22) Anmeldetag: 23.09.2003
(51) Int. Cl.: B23G 5/04, B23G 5/06, B23G 5/00, B23G 5/18

(54) **Gewindefräs- oder -schneidwerkzeug und Verfahren zu seiner Herstellung**

(30) Priorität: 19.10.2002 DE 10248815
(71) Anmelder: EMUGE-Werk Richard Glimpel GmbH & Co.KG Fabrik für Präzisionswerkzeuge, 91207 Lauf (DE)
(72) Erfinder: Glimpel, Helmut, 91207 Lauf (DE); Meyer, Ernst, 91207 Lauf (DE)
(74) Vertreter: Schröer, Gernot H., Dipl.-Phys.

(57) **Zusammenfassung**

Die Erfindung betrifft ein Gewindefräs- oder -schneidwerkzeug (1) mit einem um eine Rotationsachse (D) drehbaren Trägerkörper (2) und mindestens einem Schneidelement (3, 3', 3", 3'''). Des Weiteren betrifft die Erfindung ein Verfahren zur Herstellung eines solchen Gewindefräs- oder -schneidwerkzeugs.

## Beschreibung

Die Erfindung betrifft ein Gewindefräs- oder -schneidwerkzeug. Des Weiteren betrifft die Erfindung ein Verfahren zur Herstellung eines solchen Gewindefräsoder -schneidwerkzeugs.

Gattungsgemäße Gewindefräs- oder -schneidwerkzeuge werden benötigt, um beispielsweise in die Außenumfangsfläche eines bolzenartigen Abschnitts ein Gewinde einzuschneiden. Ein vorbekanntes Gewindefräswerkzeug weist hierfür einen drehbaren Trägerkörper auf, in dessen einem axialen Endbereich Schneidelemente angeordnet sind. Diese haben eine im Wesentlichen prismenförmige Gestalt und weisen in ihrem Mittenbereich eine Durchgangsbohrung auf. Diese dient dazu, das Schneidelement am Trägerkörper mittels einer Schraube festzulegen. Für eine exakte Positionierung des Schneidelements auf dem Trägerkörper weist letzterer zumeist radiale Anlageflächen, Anlageflächen in Umfangsrichtung und axiale Anlageflächen für die einzelnen Schneidelemente auf. Ein solches Werkzeug ist beispielsweise aus DE 199 58 636 A1 bekannt.

Bei den vorbekannten Werkzeugen hat sich folgender Umstand als nachteilig erwiesen: Bei manchen Anwendungsfällen kommt es darauf an, dass das Gewindefräs- oder -schneidwerkzeug beim Schneiden eines Außengewindes eines Bolzens radial möglichst klein baut. Dies kann namentlich dann notwendig sein, wenn Außengewinde an benachbarten Bolzen zu schneiden sind, die mit geringem Abstand nebeneinander angeordnet sind. In diesem Falle ist es für die Durchführung des Gewindeschneidvorganges nötig, auf ein Werkzeug zugreifen zu können, das eine geringe radiale Erstreckung aufweist.

Dies ist bei bekannten Gewindefräs- oder -schneidwerkzeugen nicht der Fall. Für ein sicheres Befestigen der Schneidelemente am Trägerkörper müssen diese eine hinreichende Breite haben, um durch die Schraube zuverlässig fixiert werden zu können. Damit ist eine minimale Breite des Scheidelements vorgegeben. Beim Schneiden eines Außengewindes eines zylindrischen Bolzens bedeutet dies, dass vorbekannte Gewindefräs- oder -schneidwerkzeuge in Bezug auf den zu schneidenden Gewindedurchmesser einen relativ großen Außendurchmesser aufweisen.

Der Erfindung liegt daher die Aufgabe zugrunde, ein Gewindefräs- oder -schneidwerkzeug zu schaffen, das die vorgenannten Nachteile überwindet, d. h. in Bezug auf den zu fertigenden Gewindedurchmesser im Vergleich zu vorbekannten Lösungen einen kleineren Außendurchmesser aufweist. Damit soll eine einfachere Handhabung des Werkzeugs und ein leichteres Durchführen des Gewindefräs- bzw. - schneidvorgangs möglich werden.

Diese Aufgabe wird in vorrichtungstechnischer Hinsicht mit einer Anordnung nach den Merkmalen des Patentanspruchs 1 oder des Patentanspruchs 2 und in verfahrenstechnischer Hinsicht mit den Merkmalen gemäß Patentanspruch 21 gelöst.

Die Erfindung sieht gemäß Anspruch 1 ein Gewindefräs- oder -schneidwerkzeug vor mit
- einem um eine Rotationsachse drehbaren Trägerkörper,
- mindestens einem am Trägerkörper lösbar festlegbaren oder festgelegten Schneidelement und
- mindestens einem am Trägerkörper lösbar festlegbaren oder festgelegten Befestigungselement,
   wobei
- das mindestens eine Schneidelement keine Bohrung für die Festlegung mittels einer Befestigungsschraube aufweist,
- sondern zwischen dem Trägerkörper und dem mindestens einen Befestigungselement und/oder zwischen wenigstens zwei Befestigungselementen formschlüssig und/oder kraftschlüssig festlegbar oder festgelegt ist.

Eine weitere Lösung der gestellten Aufgabe ist im fakultativ auf Anspruch 1 rückbezogenen Anspruch 2 angegeben. Gemäß Anspruch 2 ist ein Gewindefräsoder -schneidwerkzeug vorgesehen mit
- einem um eine Rotationsachse drehbaren Trägerkörper,
- mindestens einem Schneidelement und
- mindestens einem Befestigungselement, das am Trägerkörper über mindestens ein Verbindungsmittel, insbesondere eine Schraubverbindung, lösbar festlegbar oder lösbar festgelegt ist,
- wobei das mindestens eine Schneidelement zwischen dem Trägerkörper und dem mindestens einen Befestigungselement und/oder zwischen wenigstens zwei Befestigungselementen formschlüssig und/oder kraftschlüssig und lösbar festlegbar oder festgelegt ist,
- wobei jedes Befestigungselement und jedes Verbindungsmittel jeweils außerhalb des Schneidelements angeordnet ist und jeweils weder das Schneidelement durchdringt noch vom Schneidelement umschlossen wird.

Der mit der Erfindung erzielte Vorteil bestehen insbesondere darin, dass auf das Festschrauben des Schneidelements selber verzichten werden kann und die Schneidelemente daher keine Bohrung für die Festlegung mittels einer Befestigungsschraube mehr aufweisen müssen. Dies hat zur Folge, dass schmalere Schneidelemente als beim Stand der Technik verwendet werden können. Dies gestattet insgesamt die Ausbildung von Gewindefräs- und -schneidwerkzeugen, die in Relation zum Durchmesser eines zu fertigenden Außengewindes einen geringeren Außendurchmesser aufweisen, als dies bei vorbekannten Lösungen der Fall ist. Entsprechendes gilt im Falle der Fertigung eines Innengewindes, wobei durch das vorgeschlagene Werkzeug Gewinde mit geringerem Durchmesser gefräst oder geschnitten werden können, als dies mit vorbekannten Werkzeugen der Fall ist. Damit wird eine einfachere Handhabung der Werkzeuge und ein leichteres Durchführen des Gewindefräs- bzw. -schneidvorgangs möglich.

Im Vergleich zu vorbekannten Lösungen sieht die Erfindung somit vor, die Schneidelemente nicht mehr über Schrauben, die durch Bohrungen der Schneidelemente geführt werden, am Trägerkörper zu befestigen, sondern über die Anordnung spezieller Befestigungselemente, die ein form- und/oder kraftschlüssiges Festlegen der Schneidelemente am Trägerkörper auch ohne Bohrung im Schneidelement erlauben. Dabei ist es sowohl möglich, das Schneidelement zwischen dem Trägerkörper und dem mindestens einen Befestigungselement festzulegen, als auch das Schneidelement zwischen wenigstens zwei Befestigungselementen festzulegen, ohne dass hierfür eine unmittelbare Berührung zwischen Schneidelement und Trägerkörpers erforderlich ist.

Eine Fortbildung der Erfindung sieht vor, dass jedes Befestigungselement in einem festgelegten Zustand an dem zugehörigen Schneidelement von außen anliegt, so dass es das Schneidelement festlegt, und in einem gelösten Zustand des Befestigungselements oder der Befestigungselemente das zugehörige Schneidelement vom Trägerkörper abnehmbar ist.

Weiter kann vorgesehen sein, dass wenigstens ein Befestigungselement im gelösten Zustand noch mit dem Trägerkörper, insbesondere über das Verbindungsmittel, verbunden ist, insbesondere mit Abstand. Ferner kann das wenigstens eine Befestigungselement im gelösten Zustand ganz vom Trägerkörper abnehmbar oder abgenommen sein.

Eine vorteilhafte Ausgestaltung der Erfindung besteht darin, dass das mindestens eine Schneidelement zwischen dem Trägerkörper und dem mindestens einen Befestigungselement und/oder zwischen wenigstens zwei Befestigungselementen klemmbar oder geklemmt ist. Die Festlegung des Schneidelements erfolgt somit entweder durch Klemmung des Schneidelements zwischen Trägerkörper und mindestens einem Befestigungselement oder durch Klemmung des Schneidelements zwischen wenigstens zwei Befestigungselemente, ohne dass eine direkte Berührung zwischen Schneidelement und Trägerkörper erforderlich ist.

Eine bevorzugte Weiterbildung sieht dabei vor, dass wenigstens ein Befestigungselement zumindest im Klemmbereich mit dem Schneidelement nach Art eines Klemmkeils und/oder im Wesentlichen prismenförmig ausgebildet ist und/oder eine Klemmkeilwirkung auf das Schneidelement ausübt.

Eine effiziente Festlegung des Schneidelements am Trägerkörper kann dadurch sichergestellt werden, dass Schneidelement und Befestigungselement sich an einer Ebene berühren, die sich in Richtung der Rotationsachse erstreckt und mit der radialen Richtung einen Winkel einschließt. Der Winkel liegt bevorzugt im Bereich zwischen 10° bis 30°.

Eine formschlüssige Festlegung des Schneidelements kann dadurch erreicht werden, dass das Befestigungselement das Schneidelement in radialer Richtung umgreift und im montierten Zustand des Schneidelements dieses gegen den Trägerkörper drückt.

Eine weitere vorteilhafte Ausgestaltung der Erfindung besteht darin, dass der Trägerkörper für das oder jedes Schneidelement wenigstens eine Anlagefläche in radialer Richtung und/oder wenigstens eine Anlagefläche in Umfangsrichtung und/oder wenigstens eine Anlagefläche in axialer Richtung aufweist und dass das Schneidelement zwischen dem Befestigungselement und der Anlagefläche in radialer Richtung und/oder der Anlagefläche in Umfangsrichtung und/oder der Anlagefläche in axialer Richtung festlegbar oder festgelegt ist. Für eine präzise Positionierung der Schneidelemente können die Anlageflächen für die Anlage des Schneidelements in radialer Richtung, Umfangsrichtung und/oder axialer Richtung an die Trägerkörperelemente geschliffen werden.

Eine alternative Ausgestaltung des erfindungsgemäßen Werkzeugs stellt auf folgendes Konzept ab: Das Befestigungselement kann einen in den Trägerkörper einschraubbaren Gewindeabschnitt für die Verbindungsmittel und einen Klemmabschnitt aufweisen. Dabei kann vorgesehen sein, dass das Schneidelement in einem Bereich des Kontakts mit dem Befestigungselement einen im Randbereich angeordneten Einschnitt, insbesondere einen kreissegmentartigen Einschnitt, aufweist. Namentlich kann hier vorgesehen werden, dass der Einschnitt nach Art einer Whistlenotch- oder Weldon-Spannfläche ausgebildet ist.

Im Zusammenhang mit dieser Ausgestaltung kann vorgesehen werden, an dem Schneidelement an seinem von der Schneidkante entfernt angeordneten Ende eine runde Verlängerung anzubringen, in die ein seitlicher, kreissegmentartiger Einschnitt eingebracht wird. Diese rundstabförmige Verlängerung kann dann in eine entsprechend ausgebildete zylindrische Aufnahme im Trägerkörper eingeführt werden; durch eine weitere Bohrung im Trägerkörper kann eine Klemmschraube an dem tangentialen Einschnitt in der runden Verlängerung radial eingeführt werden, die das Schneidelement verklemmt. Der tangentiale Einschnitt kann - wie erwähnt - nach Art einer Whistlenotch oder Weldon ausgestaltet sein. Das Befestigungselement in Form der genannten Fixierschraube drückt dann mit seiner Stirnseite auf den tangentialen Einschnitt in der runden Verlängerung des Schneidelements. Bei einer Whistlenotch ist die Klemmfläche etwas geneigt.

Eine besonders vorteilhafte Bauform ergibt sich durch folgende Ausgestaltung: Der Trägerkörper kann aus zwei Trägerkörperelementen bestehen, die vorzugsweise jeweils im Wesentlichen rotationssymmetrisch ausgebildet sind. Das eine Trägerkörperelement hat dabei vorteilhafter Weise mindestens einen Aufnahmeabschnitt zur Aufnahme und Halterung des mindestens einen Schneidelements. Weiterhin kann der Aufnahmeabschnitt mindestens einen sich in axiale Richtung erstreckenden Abstützsteg für das Schneidelement aufweisen.

Besonders bevorzugt hat das eine Trägerkörperelement für das Schneidelement die Anlagefläche in radialer Richtung und die Anlagefläche in Umfangsrichtung, während das andere Trägerkörperelement für das Schneidelement die Anlagefläche in axialer Richtung aufweist. Hierdurch wird eine besonders einfache Fertigung der Anlageflächen möglich.

Ferner kann das eine Trägerkörperelement einen zylindrischen Abschnitt aufweisen, der in einer Bohrung im anderen Trägerkörperelement anordenbar ist. Eine präzise Positionierung beider Trägerkörperelemente kann dadurch erreicht werden, dass zwischen dem zylindrischen Abschnitt des einen Trägerkörperelements und der Bohrung des anderen Trägerkörperelements eine Presspassung vorliegt. Diese kann mit Vorteil durch einen Aufschrumpfvorgang hergestellt werden. Alternativ kann die Verbindung zwischen den beiden Trägerkörperelementen auch durch eine Verschraubung hergestellt werden.

Ein schneller Werkzeugwechsel wird dadurch möglich, dass das Gewindefräs- oder - schneidwerkzeug an seinem einen, dem mindestens einen Schneidelement abgewandten axialen Ende mit einem Werkzeugschnellspannsystem ausgestattet wird. Hierbei kommt bevorzugt ein Werkzeugschnellspannsystem mit einem Hohlspannkegel zum Einsatz.

Für eine gute Versorgung der Schneidstelle des Schneidelements mit Kühlschmiermittel kann vorgesehen werden, dass in den Trägerkörper Versorgungsbohrungen und/oder Versorgungsnuten eingearbeitet sind, über die der Bereich des Schneidelements mit Kühlschmiermittel versorgt werden kann. Hierbei kann insbesondere vorgesehen werden, dass zwischen der radialen Anlagefläche und der Anlagefläche in Umfangsrichtung für das Schneidelement ein Freistich in den Trägerkörper eingearbeitet ist, der als Versorgungsnut dient.

Die zum Einsatz kommenden Schneidelemente können mehr als einen Schneidbereich aufweisen, wodurch im Falle des Verschleißes einer Schneidkante das Schneidelement durch Drehen wiederverwendbar ist.

Ferner wird das Schneidelement in der Regel den Trägerkörper einseitig axial überragen. In Verbindung mit dem Vorsehen der bereits genannten Aufnahmeabschnitte mit Abstützstegen ergibt sich ein "glockenförmiges" Werkzeug, das sich sehr gut für das Fertigen von Außengewinden an zylindrischen Bolzen eignet. In diesem Falle sind die wirksamen Schneidkanten des Schneidelements radial nach innen gerichtet.

Die Erfindung sieht gemäß Anspruch 21 ein Verfahren zum Herstellen des Gewindefräs- oder -schneidwerkzeugs vor, das folgende Schritte aufweist:
a) Herstellen eines ersten Trägerkörperelements, das einen Aufnahmeabschnitt für mindestens ein Schneidelement sowie einen sich an den Aufnahmeabschnitt axial anschließenden zylindrischen Abschnitt aufweist;
b) Herstellen einer radialen Anlagefläche und einer Anlagefläche in Umfangsrichtung für das mindestens eine Schneidelement am ersten Trägerkörperelement;
c) Herstellen eines zweiten Trägerkörperelements, das eine Bohrung zur Aufnahme des zylindrischen Abschnitts des ersten Trägerkörperelements aufweist;
d) Herstellen einer axialen Anlagefläche für das mindestens eine Schneidelement am zweiten Trägerkörperelement;
e) festes Verbinden des ersten und des zweiten Trägerkörperelements nach Einführen des zylindrischen Abschnitts in die Bohrung.

Hierbei kann insbesondere vorgesehen werden, dass die Herstellung der Anlageflächen gemäß den obigen Schritten b) und d) durch Schleifen erfolgt. Ferner ergibt sich ein besonders guter Verbund, wenn das Verbinden des ersten und des zweiten Trägerkörperelements gemäß obigem Schritt e) durch thermisches Aufschrumpfen erfolgt.

Insgesamt ergibt sich damit ein einfach aufgebautes Gewindefräs- oder -schneidwerkzeug, das für eine Vielzahl von Anwendungen Vorteile bietet und einfach gehandhabt werden kann.

In der Zeichnung ist ein Ausführungsbeispiel der Erfindung dargestellt. Es zeigen:
- FIG 1: eine perspektivische Ansicht eines Gewindefräs- oder -schneidwerkzeugs,
- FIG 2: die Seitenansicht des Werkzeugs gemäß FIG 1,
- FIG 3: den Schnitt A-B gemäß FIG 2,
- FIG 4: die teilweise Vorderansicht auf das Werkzeug von der linken Seite gemäß FIG 2 bzw. FIG 3,
- FIG 5: die vollständige Vorderansicht auf das Werkzeug von der linken Seite gemäß FIG 2 bzw. FIG 3 und
- FIG 6: eine perspektivische Ansicht eines Gewindefräs- oder -schneidwerkzeugs gemäß dem Stand der Technik.

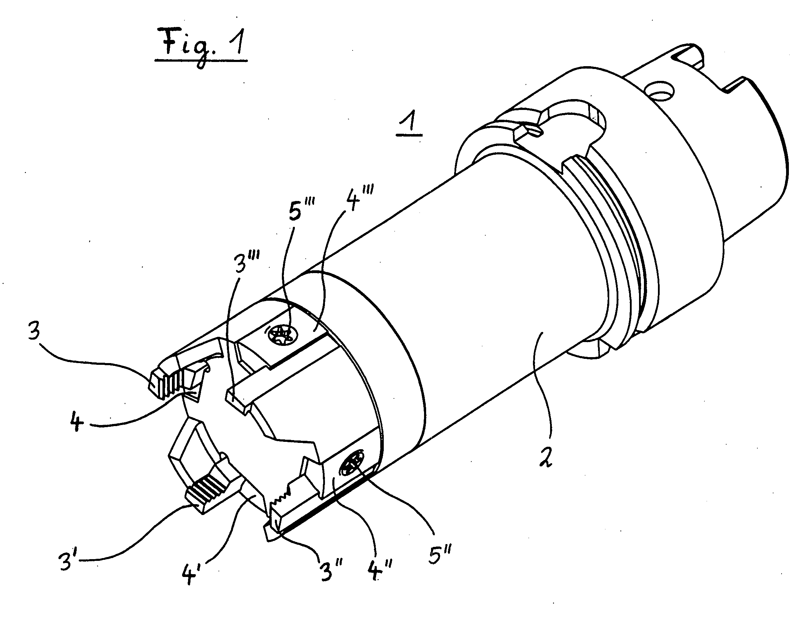

In FIG 1 ist in perspektivischer Ansicht ein Gewindefräs- oder -schneidwerkzeug 1 zu sehen. Es weist einen Trägerkörper 2 auf, der um die Rotationsachse D drehbar ist. Im linken axialen Endbereich des Werkzeugs 1 sind gleichmäßig über den Umfang verteilt vier Schneidelemente 3, 3', 3", 3''' angeordnet, die radial nach innen gerichtete Schneidkanten aufweisen, mit denen ein nicht dargestelltes Werkstück mit einem Außengewinde versehen werden kann. Die Schneidelemente 3, 3', 3", 3''' sind im Wesentlichen prismenförmig ausgebildet und liegen an radialen, axialen und in Umfangsrichtung angeordneten, nicht bezeichneten Anlageflächen am Trägerkörper 2 an. Zur Festlegung der Schneidelemente 3, 3', 3", 3''' sind Befestigungselemente 4, 4', 4", 4''' vorgesehen, die mittels einer Schraubverbindung 5, 5', 5", 5''' am Trägerkörper 2 festgelegt sind. Wie später noch im Detail beschrieben werden wird, fixieren die Befestigungselemente 4, 4', 4", 4''' im an den Trägerkörper 2 montierten Zustand die Schneidelemente 3, 3', 3", 3''' so, dass diese fest in Position gehalten werden.

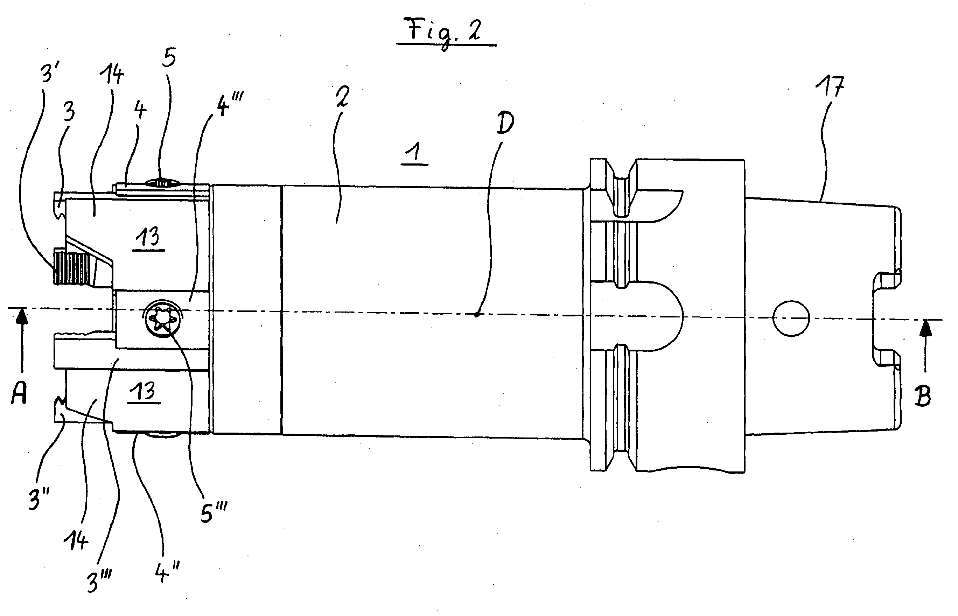

Details zum Aufbau des Werkzeugs 1 sind in den Figuren 2 bis 4 zu erkennen.

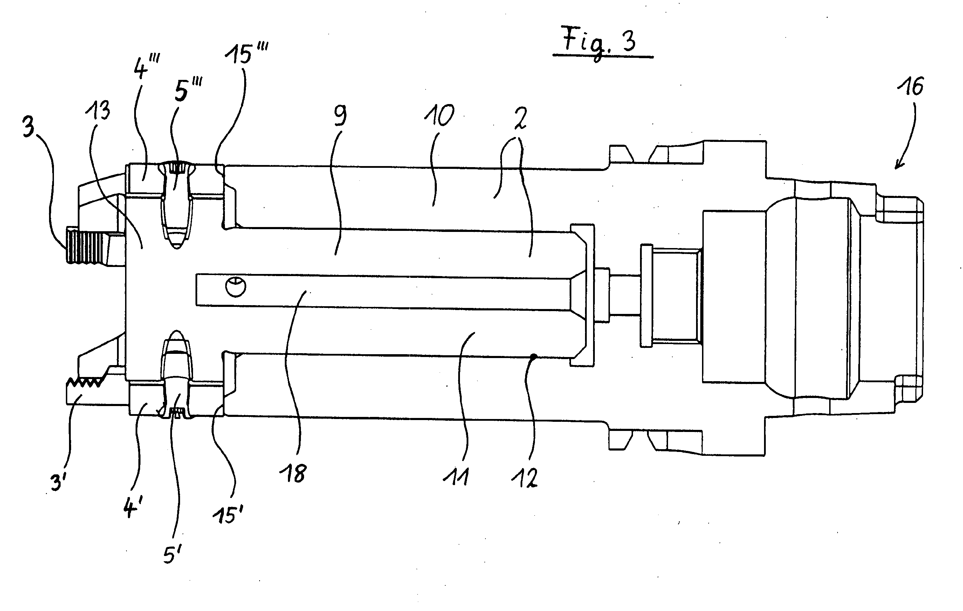

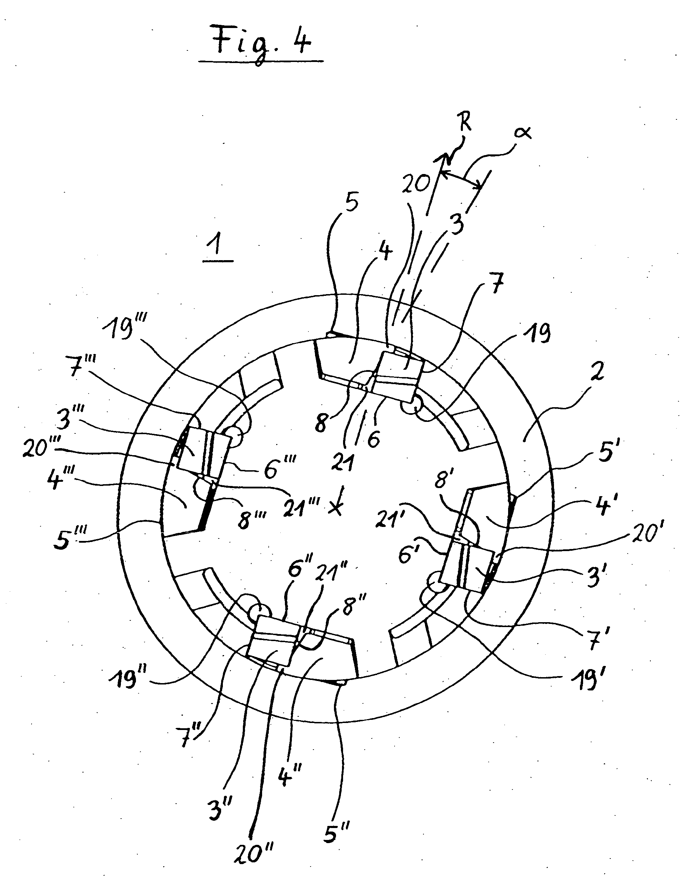

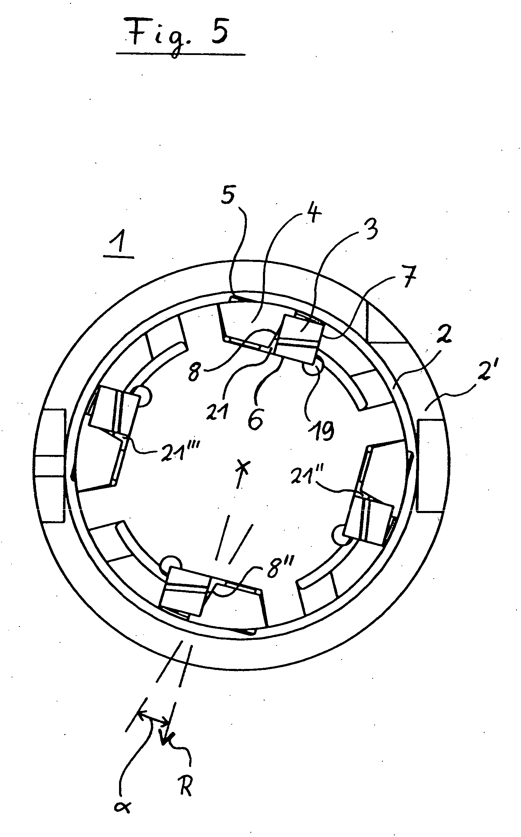

Wie am besten aus FIG 3 hervorgeht, besteht der Trägerkörper 2 aus zwei Trägerkörperelementen 9 und 10. Das Trägerkörperelement 9 hat einen scheibenförmigen Aufnahmeabschnitt 13 sowie einen sich hieran axial mit geringerem Durchmesser anschließenden zylindrischen Abschnitt 11. Das Trägerkörperelement 10 ist im Wesentlichen hohlzylindrisch ausgebildet und weist eine Bohrung 12 zur Aufnahme des zylindrischen Abschnitts 11 des ersten Trägerkörperelements 9 auf. Am rechten axialen Ende des Trägerkörperelements 10 ist ein Werkzeugschnellspannsystem 16 mit einem Hohlspannkegel 17 (nach DIN 69893) angeordnet (s. FIG 2 und 3). Ein Hohlspannkegel 17 ist ein Spannkegel zur Spannaufnahme des Werkzeugs 1, bei dem neben dem Außenkegel zusätzlich innere Spannelemente vorgesehen sind, die radial nach außen federnd drücken und somit den Kraftschluss verstärken und auch eine thermische Ausdehnung des Außenkegels nachführen.

Der Aufnahmeabschnitt 13 des ersten Trägerkörperelements 9 weist zur Unterstützung eines jeden Schneidelements 3, 3', 3", 3''' je einen Abstützsteg 14 auf, der sich in axialer Richtung erstreckt. Hieran liegt das jeweilige Schneidelement 3, 3', 3", 3''' an, wodurch eine präzise und stabile Halterung der Schneidelemente gewährleistet ist.

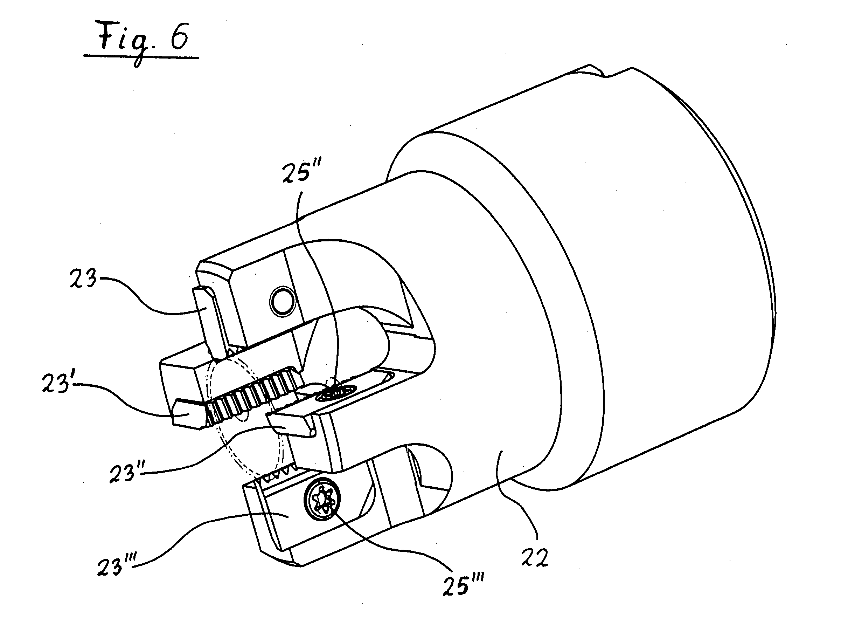

Damit die einzelnen Schneidelemente 3, 3', 3", 3''' eine definierte und genaue Anlage im Trägerkörperelement 2 finden, weist der Aufnahmeabschnitt 13 - wie es am besten in FIG 4 zu sehen ist - radiale Anlageflächen 6, 6', 6", 6''' sowie Anlageflächen in Umfangsrichtung 7, 7', 7", 7''' auf. In FIG 3 ist indes zu sehen, dass das Trägerkörperelement 10 des Trägerkörpers 2 an seinem linken axialen Ende eine Anlagefläche in axialer Richtung 15, 15', 15", 15''' aufweist.

Durch die Möglichkeit, den Trägerkörper 2 durch die beiden Trägerkörperelemente 9 und 10 zu bilden, ist es fertigungstechnisch in besonders einfacher Weise möglich, die Anlageflächen 6, 6', 6", 6''', 7, 7', 7", 7''' und 15, 15', 15", 15''' zu fertigen, d. h. namentlich zu fräsen und anschließend zu schleifen. Nutgründe spielen dabei keine Rolle, wie es bei Einteiligkeit des Trägerkörpers 2 der Fall wäre. Die Fertigung der Anlageflächen erfolgt also bei demontierten Trägerkörperelementen 9 und 10.

Zur Verbindung der beiden Bauteile 9 und 10 hat es sich bewährt, das Trägerkörperelement 10 zu erhitzen und/oder das Trägerkörperelement 9 abzukühlen, den zylindrischen Abschnitt 11 dann in die Bohrung 12 einzuführen und anschließend einen Temperaturausgleich stattfinden zu lassen. Die beiden Trägerkörperelemente 9 und 10 werden auf diese Weise durch einen thermischen Schrumpfprozess miteinander verbunden, was insbesondere dazu führt, dass die beiden Teile maßgenau mit gleichmäßigem Kraftschluss und ohne Unwuchten miteinander verbunden sind; alternativ hierzu können freilich die beiden Teile 9 und 10 auch über eine Schraubverbindung miteinander verbunden werden.

Wie es insbesondere in FIG 4 zu sehen ist, sind die Schneidelemente 3, 3', 3", 3''' und die Befestigungselemente 4, 4', 4", 4''' an ihrer Kontaktfläche so ausgebildet, dass sich eine Ebene 8, 8', 8", 8''' ergibt, die sich in Richtung der Rotationsachse D erstreckt und die zur radialen Richtung R einen Winkel α einschließt. Auf diese Weise wird erreicht, dass bei Festlegung des Befestigungselements 4, 4', 4", 4"' auf das Schneidelement 3, 3', 3", 3''' mittels der entstehenden Keilwirkung eine hohe Spannkraft ausgeübt wird, so dass die Schneidelemente 3, 3', 3", 3''' sowohl in Umfangsrichtung als auch radial am Trägerkörper 2 festgelegt werden. In FIG 4 ist zu sehen, dass die Befestigungselemente 4, 4', 4", 4''' jeweils einen das Schneidelement 3, 3', 3", 3''' radial übergreifenden Umgriff 20, 20', 20", 20''' aufweist, womit eine besonders gute Festlegung der Schneidelemente 3, 3', 3", 3''' am Trägerkörper 2 bewerkstelligt werden kann. Derartige Umgriffe 20, 20', 20", 20''' sind jedoch nicht unbedingt erforderlich, um die Schneidelemente 3, 3', 3", 3''' am Trägerkörper 2 sicher festzulegen.

Zur Versorgung der Schneid- bzw. Frässtelle der Schneidelemente 3, 3', 3", 3''' mit Kühlschmiermittel hat der Trägerkörper 2 und namentlich die beiden Trägerkörperelemente 9 und 10 eine zentrische Versorgungsbohrung 18, s. FIG 3, die im Bereich ihres linken axialen Endes in sich radial erstreckende Bohrungen bzw. Versorgungsnuten 18 übergeht. Wie in FIG 4 gesehen werden kann, ist weiterhin ein Freistich 19, 19', 19", 19''' im Bereich der Anlage des Schneidelements 3, 3', 3", 3''' am Trägerkörper 2 vorgesehen, um die Passung der beiden anliegenden Flächen zu gewährleisten. Es ist technisch nicht möglich, an dieser Stelle einen 90°-Winkel exakt herzustellen. Aus diesem Grund ist der Freistich 19, 19', 19", 19''' vorteilhaft, damit die Schneidelemente 3, 3', 3", 3''' optimal anliegen. Zwischen den Schneidelementen 3, 3', 3", 3''' und den Befestigungselementen 4, 4', 4", 4''' befindet sich jeweils ein Spalt 21, 21', 21", 21''', der als Kühlschmiermittelzulauf vorgesehen ist.

Das in den Figuren dargestellte Gewindefräs- oder -schneidwerkzeug 1 ist zur Fertigung eines Außengewindes vorgesehen, weshalb die Schneidelemente 3, 3', 3", 3''' mit ihren Schneidkanten radial nach innen gerichtet sind. Genauso kann das Werkzeug aber auch zur Herstellung von Innengewinden verwendet werden, wobei dann die Schneidkanten des Schneidelements 3, 3', 3", 3''' radial nach außen gerichtet sein müssen.

Im Falle der Fertigung eines Außengewindes ist das Gewindefräs- oder - schneidwerkzeug 1 als im Bereich der Schneidelemente 3, 3', 3", 3''' glockenförmig ausgeformtes Werkzeug ausgebildet, also als ein Werkzeug, das von außen auf das Werkstück aufgesetzt werden kann. Die zu fertigenden Gewinde können Anschlussgewinde sein, die seitlich von einem größeren Werkstück abstehen. Da solche Anschlussgewinde in manchen Ausführungen in mehrfacher Ausführung in relativ kleinem Abstand zueinander erzeugt werden müssen, ist es wichtig, dass der Außendurchmesser des Werkzeugs 1 möglichst klein bleibt, was durch die vorgeschlagenen Maßnahmen sichergestellt ist. Das Werkzeug ermöglicht - im Vergleich mit den vorbekannten Lösungen - eine Verringerung des Außendurchmessers, da sich bei den Lösungen des Standes der Technik beim Außendurchmesser immer die radialen Abmessungen der Schneidelemente und des Vorsprungs des Trägerkörpers addieren, bei der vorgeschlagenen Lösung jedoch praktisch die Schneidelemente die Außenfläche bilden können.

Auch die Handhabung verschlissener Schneidelemente ist sehr einfach, da diese sowohl radial von außen als auch axial von der Stirnseite des Werkzeugs her eingesetzt werden können.

Weitere Vorteile der vorgeschlagenen Ausbildung sind neben der Platzersparnis und der kompakten Ausführung des Werkzeugs auch, dass die Schneidelemente nicht mehr durch Einbringung einer Bohrung für die Festlegung mittels einer Befestigungsschraube geschwächt werden müssen. Dies ist besonders relevant, da die Schneidelemente zumeist aus sprödem Material wie Hartmaterial, HSS (Schnellschnittstahl), CBN (kubisch kristallines Bornitrid) oder PKD (polykristalliner Diamant) bestehen.

Das Schneidelement kann also als Ganzes erhalten bleiben und darüber hinaus auch verkleinert ausgebildet werden, da kein Bereich mehr für das Schraubloch vorgesehen werden muss.

Wie bei vorbekannten Lösungen, ermöglicht es auch das vorgeschlagene Werkzeug gleichermaßen, einen leichten Austausch eines verschlissenen Schneidelements gegen ein neues zu bewerkstelligen. Darüber hinaus kann das Schneidelement auch mehrere Schneidbereiche aufweisen, insbesondere an zwei, drei oder vier Ecken. Das Schneidelement kann dann im Falle von Verschleiß einfach um 90° oder um 180° gedreht werden, so dass das Werkzeug wieder einsatzfähig ist.

Das erläuterte Ausführungsbeispiel stellt auf ein Gewindefräs- oder -schneidwerkzeug zur Herstellung eines zylindrischen Außengewindes ab. Genauso ist es aber auch möglich, die Schneidkanten der Schneidelemente 3, 3', 3", 3''' mit anderen Profilen zu versehen, so dass nicht nur die Verzahnung eines Gewindes hergestellt werden kann. Der schneidende Bereich der Schneidelemente 3, 3', 3", 3''' kann auch zur Rotationsachse D hin geneigt sein, wodurch es möglich wird, kegelige Bolzen mit einem Gewinde zu versehen.

In FIG 5 ist eine vollständige Vorderansicht auf das Werkzeug von der linken Seite gemäß FIG 2 bzw. FIG 3 dargestellt. FIG 5 ist mit FIG 4 im Wesentlichen identisch, wobei in FIG 5 zusätzlich die Struktur des äußeren Bereiches 2' des Trägerkörpers 2 dargestellt ist. Die Kanten der Ausnehmungen im äußeren Bereich 2' des Trägerkörpers 2 sind in FIG 4 aus Gründen der Übersichtlichkeit nicht dargestellt. Somit handelt es sich bei FIG 5 um eine vollständige Vorderansicht auf das Werkzeug gemäß FIG 2 und FIG 3.

FIG 6 zeigt eine Perspektivansicht eines Werkzeuges gemäß dem Stand der Technik. Das Werkzeug umfasst einen Trägerkörper 22, an dem Schneidelemente 23, 23', 23", 23''' angebracht sind. Die Schneidelemente 23" und 23''' sind mittels Schraubverbindungen 25" bzw. 25''' unmittelbar am Trägerkörper 22 angeschraubt. Die Schneidelemente 23 und 23' sind auf gleiche Weise mittels nicht dargestellter Schraubverbindungen angebracht.

### Bezugszeichenliste

- 1: Gewindefräs- oder -schneidwerkzeug
- 2: Trägerkörper
- 2': äußerer Bereich des Trägerkörpers
- 3: Schneidelement
- 3': Schneidelement
- 3": Schneidelement
- 3''': Schneidelement
- 4: Befestigungselement
- 4': Befestigungselement
- 4": Befestigungselement
- 4''': Befestigungselement
- 5: Schraubverbindung
- 5': Schraubverbindung
- 5'': Schraubverbindung
- 5''': Schraubverbindung
- 6: radiale Anlagefläche
- 6': radiale Anlagefläche
- 6": radiale Anlagefläche
- 6''': radiale Anlagefläche
- 7: Anlagefläche in Umfangsrichtung
- 7': Anlagefläche in Umfangsrichtung
- 7": Anlagefläche in Umfangsrichtung
- 7''': Anlagefläche in Umfangsrichtung
- 8: Ebene
- 8': Ebene
- 8": Ebene
- 8''': Ebene
- 9: Trägerkörperelement
- 10: Trägerkörperelement
- 11: zylindrischer Abschnitt
- 12: Bohrung
- 13: Aufnahmeabschnitt
- 14: Abstützsteg
- 15: Anlagefläche in axialer Richtung
- 15': Anlagefläche in axialer Richtung
- 15'': Anlagefläche in axialer Richtung
- 15''': Anlagefläche in axialer Richtung
- 16: Werkzeugschnellspannsystem
- 17: Hohlspannkegel
- 18: Versorgungsbohrungen/Versorgungsnuten
- 19: Freistich
- 19': Freistich
- 19'': Freistich
- 19''': Freistich
- 20: Umgriff
- 20': Umgriff
- 20": Umgriff
- 20''': Umgriff
- 21: Spalt
- 21': Spalt
- 21'': Spalt
- 21''': Spalt
- 22: Trägerkörper
- 23: Schneidelement
- 23': Schneidelement
- 23": Schneidelement
- 23''': Schneidelement
- 25": Schraubverbindung
- 25''': Schraubverbindung

- D: Rotationsachse
- R: radiale Richtung
- α: Winkel

## Patentansprüche

1. Gewindefräs- oder -schneidwerkzeug (1) mit
a) einem um eine Rotationsachse (D) drehbaren Trägerkörper (2),
b) mindestens einem am Trägerkörper (2) lösbar festlegbaren oder festgelegten Schneidelement (3, 3', 3", 3''') und
c) mindestens einem am Trägerkörper (2) lösbar festlegbaren oder festgelegten Befestigungselement (4, 4', 4", 4'''),
wobei
d) das mindestens eine Schneidelement (3, 3', 3", 3''') keine Bohrung für die Festlegung mittels einer Befestigungsschraube aufweist,
e) sondern zwischen dem Trägerkörper (2) und dem mindestens einen Befestigungselement (4, 4', 4", 4''') und/oder zwischen wenigstens zwei Befestigungselementen formschlüssig und/oder kraftschlüssig festlegbar oder festgelegt ist.

2. Gewindefräs- oder -schneidwerkzeug, insbesondere nach Anspruch 1, mit
a) einem um eine Rotationsachse (D) drehbaren Trägerkörper (2),
b) mindestens einem Schneidelement (3, 3', 3", 3''') und
c) mindestens einem Befestigungselement (4, 4', 4", 4'''), das am Trägerkörper (2) über mindestens ein Verbindungsmittel, insbesondere eine Schraubverbindung (5, 5', 5", 5"'), lösbar festlegbar oder lösbar festgelegt ist,
d) wobei das mindestens eine Schneidelement (3, 3', 3", 3''') zwischen dem Trägerkörper (2) und dem mindestens einen Befestigungselement (4, 4', 4", 4''') und/oder zwischen wenigstens zwei Befestigungselementen formschlüssig und/oder kraftschlüssig und lösbar festlegbar oder festgelegt ist,
e) wobei jedes Befestigungselement (4, 4', 4", 4''') und jedes Verbindungsmittel (5, 5', 5", 5''') jeweils außerhalb des Schneidelements (3, 3', 3", 3''') angeordnet ist und jeweils weder das Schneidelement (3, 3', 3", 3''') durchdringt noch vom Schneidelement umschlossen wird.

3. Gewindefräs- oder -schneidwerkzeug nach Anspruch 1 oder 2, bei dem jedes Befestigungselement (4, 4', 4", 4''') in einem festgelegten Zustand an dem zugehörigen Schneidelement (3, 3', 3", 3''') von außen anliegt, so dass es das Schneidelement (3, 3', 3", 3''') festlegt, und in einem gelösten Zustand des oder der Befestigungselements/e (4, 4', 4", 4''') das zugehörige Schneidelement (3, 3', 3", 3''') vom Trägerkörper (2) abnehmbar ist.

4. Gewindefräs- oder -schneidwerkzeug nach Anspruch 3, bei dem wenigstens ein Befestigungselement (4, 4', 4", 4''') im gelösten Zustand noch mit dem Trägerkörper (2), insbesondere über das Verbindungsmittel (5, 5', 5", 5'''), verbunden ist, insbesondere mit Abstand.

5. Gewindefräs- oder -schneidwerkzeug nach Anspruch 3 oder Anspruch 4, bei dem wenigstens ein Befestigungselement (4, 4', 4", 4''') im gelösten Zustand ganz vom Trägerkörper (2) abnehmbar oder abgenommen ist.

6. Gewindefräs- oder -schneidwerkzeug nach einem oder mehreren der vorhergehenden Ansprüche, bei dem das mindestens eine Schneidelement (3, 3', 3", 3''') zwischen dem Trägerkörper (2) und dem mindestens einen Befestigungselement (4, 4', 4", 4''') und/oder zwischen wenigstens zwei Befestigungselementen klemmbar oder geklemmt ist.

7. Gewindefräs- oder -schneidwerkzeug nach Anspruch 6, bei dem wenigstens ein Befestigungselement (4, 4', 4", 4''') zumindest im Klemmbereich mit dem Schneidelement nach Art eines Klemmkeils und/oder im Wesentlichen prismenförmig ausgebildet ist und/oder eine Klemmkeilwirkung auf das Schneidelement ausübt.

8. Gewindefräs- oder -schneidwerkzeug nach einem oder mehreren der vorhergehenden Ansprüche, bei dem Schneidelement (3, 3', 3", 3''') und Befestigungselement (4, 4', 4", 4''') sich an einer Ebene (8, 8', 8", 8''') berühren, die sich in Richtung der Rotationsachse (D) erstreckt und mit der radialen Richtung (R) einen Winkel (α) einschließt.

9. Gewindefräs- oder -schneidwerkzeug nach einem oder mehreren der vorhergehenden Ansprüche, bei dem das Befestigungselement (4, 4', 4", 4''') das Schneidelement (3, 3', 3", 3''') in radialer Richtung (R) umgreift und gegen den Trägerkörper (2) drückt.

10. Gewindefräs- oder -schneidwerkzeug nach einem oder mehreren der vorhergehenden Ansprüche, bei dem der Trägerkörper (2) für das oder jedes Schneidelement (3, 3', 3", 3''') wenigstens eine Anlagefläche (6, 6', 6", 6''') in radialer Richtung und/oder wenigstens eine Anlagefläche (7, 7', 7", 7''') in Umfangsrichtung und/oder wenigstens eine Anlagefläche in axialer Richtung (15', 15''') aufweist und bei dem das Schneidelement (3, 3', 3", 3''') zwischen dem Befestigungselement (4, 4', 4", 4''') und der Anlagefläche (6, 6', 6", 6''') in radialer Richtung und/oder der Anlagefläche (7, 7', 7", 7''') in Umfangsrichtung und/oder der Anlagefläche in axialer Richtung (15', 15''') festlegbar oder festgelegt ist, wobei vorzugsweise jede Anlagefläche geschliffen ist.

11. Gewindefräs- oder -schneidwerkzeug nach einem oder mehreren der vorhergehenden Ansprüche, bei dem das Befestigungselement (4, 4', 4", 4''') einen in den Trägerkörper (2) einschraubbaren Gewindeabschnitt für die Verbindungsmittel und einen Klemmabschnitt aufweist.

12. Gewindefräs- oder -schneidwerkzeug nach einem oder mehreren der vorhergehenden Ansprüche , bei dem das Schneidelement (3, 3', 3", 3''') in einem Bereich des Kontakts mit dem Befestigungselement (4, 4', 4", 4''') einen im Randbereich angeordneten Einschnitt, insbesondere einen kreissegmentartigen Einschnitt, aufweist, der insbesondere nach Art einer Whistlenotch oder Weldon ausgebildet ist.

13. Gewindefräs- oder -schneidwerkzeug nach einem oder mehreren der vorhergehenden Ansprüche, bei dem der Trägerkörper (2) aus zwei Trägerkörperelementen (9, 10) besteht, die vorzugsweise jeweils im Wesentlichen rotationssymmetrisch ausgebildet sind.

14. Gewindefräs- oder -schneidwerkzeug nach Anspruch 13, bei dem das eine Trägerkörperelement (9) mindestens einen Aufnahmeabschnitt (13) zur Aufnahme und Halterung des mindestens einen Schneidelements (3, 3', 3", 3''') aufweist, der vorzugsweise mindestens einen sich in axiale Richtung erstreckenden Abstützsteg (14) für das Schneidelement (3, 3', 3", 3''') aufweist.

15. Gewindefräs- oder -schneidwerkzeug nach Anspruch 13 oder 14 in einer Rückbeziehung auf Anspruch 10, bei dem das eine Trägerkörperelement (9) für das Schneidelement (3, 3', 3", 3''') die Anlagefläche (6, 6', 6", 6''') in radialer Richtung und die Anlagefläche (7, 7', 7", 7''') in Umfangsrichtung aufweist und dass das andere Trägerkörperelement (10) für das Schneidelement (3, 3', 3", 3''') die Anlagefläche (15', 15''') in axialer Richtung aufweist.

16. Gewindefräs- oder -schneidwerkzeug nach einem der Ansprüche 13 bis 15, bei dem das eine Trägerkörperelement (9) einen zylindrischen Abschnitt (11) aufweist, der in einer Bohrung (12) im anderen Trägerkörperelement (10) anordenbar oder angeordnet ist, wobei vorzugsweise zwischen dem zylindrischen Abschnitt (11) des einen Trägerkörperelements (9) und der Bohrung (12) des anderen Trägerkörperelements (10) eine Presspassung vorliegt und/oder die Verbindung zwischen den beiden Trägerkörperelementen (9, 10) durch einen Aufschrumpfvorgang oder durch eine Verschraubung hergestellt ist.

17. Gewindefräs- oder -schneidwerkzeug nach einem oder mehreren der vorhergehenden Ansprüche mit einem Werkzeugschnellspannsystem (16) an einem dem mindestens einen Schneidelement (3, 3', 3", 3''') abgewandten axialen Ende, welches Werkzeugschnellspannsystem (16) vorzugsweise einen Hohlspannkegel (17) aufweist.

18. Gewindefräs- oder -schneidwerkzeug nach einem oder mehreren der vorhergehenden Ansprüche, bei dem in den Trägerkörper (2) Versorgungsbohrungen und/oder Versorgungsnuten (18) eingearbeitet sind, über die der Bereich des Schneidelements (3, 3', 3", 3''') mit Kühlschmiermittel versorgbar oder versorgt ist.

19. Gewindefräs- oder -schneidwerkzeug nach Anspruch 18 in einer Rückbeziehung auf Anspruch 10, bei dem zwischen der radialen Anlagefläche (6, 6', 6", 6''') und der Anlagefläche (7, 7', 7", 7''') in Umfangsrichtung für das Schneidelement (3, 3', 3", 3''') ein Freistich (19, 19', 19", 19''') in den Trägerkörper (2) eingearbeitet ist, der als Versorgungsnut (18) dient.

20. Gewindefräs- oder -schneidwerkzeug nach einem oder mehreren der vorhergehenden Ansprüche, bei dem wenigstens ein Schneidelement (3, 3', 3", 3''') mindestens zwei Schneidbereiche aufweist und/oder den Trägerkörper (2) einseitig axial überragt und/oder radial nach innen gerichtete wirksame Schneidkanten aufweist.

21. Verfahren zum Herstellen eines Gewindefräs- oder -schneidwerkzeugs (1), insbesondere eines Gewindefräs- oder -schneidwerkzeugs nach Anspruch 10 oder einem auf Anspruch 10 rückbezogenen Anspruch, **gekennzeichnet durch** die Schritte:
a) Herstellen eines ersten Trägerkörperelements (9), das einen Aufnahmeabschnitt (13) für mindestens ein Schneidelement (3, 3', 3", 3''') sowie einen sich an den Aufnahmeabschnitt (13) axial anschließenden zylindrischen Abschnitt (11) aufweist;
b) Herstellen einer radialen Anlagefläche (6, 6', 6", 6''') und einer Anlagefläche in Umfangsrichtung (7, 7', 7", 7''') für das mindestens eine Schneidelement (3, 3', 3", 3''') am ersten Trägerkörperelement (9);
c) Herstellen eines zweiten Trägerkörperelements (10), das eine Bohrung (12) zur Aufnahme des zylindrischen Abschnitts (11) des ersten Trägerkörperelements (9) aufweist;
d) Herstellen einer axialen Anlagefläche (15', 15''') für das mindestens eine Schneidelement (3, 3', 3", 3''') am zweiten Trägerkörperelement (10);
e) festes Verbinden des ersten und des zweiten Trägerkörperelements (9, 10) nach Einführen des zylindrischen Abschnitts (11) in die Bohrung (12).

22. Verfahren nach Anspruch 21, bei dem die Herstellung der Anlageflächen (6, 6', 6'', 6''', 7, 7', 7'', 7''', 15, 15', 15'', 15''') gemäß Schritt b) und d) von Anspruch 21 durch Schleifen erfolgt.

23. Verfahren nach Anspruch 21 oder 22, bei dem das Verbinden des ersten und des zweiten Trägerkörperelements (9, 10) gemäß Schritt e) von Anspruch 21 durch thermisches Aufschrumpfen erfolgt.
